# EUROPÄISCHE PATENTANMELDUNG

(11) **EP 3 028 906 A1**
(43) Veröffentlichungstag der Anmeldung: **08.06.2016**
(21) Anmeldenummer: 15190967.8
(22) Anmeldetag: 22.10.2015
(51) Int. Cl.: B60S 1/34

(54) **WISCHARMVORRICHTUNG**

(30) Priorität: 02.12.2014 DE 102014224668
(71) Anmelder: ROBERT BOSCH GMBH, 70442 Stuttgart (DE)
(72) Erfinder: Goeller, Alexander, 72270 Baiersbronn (DE); Mildenberger, Sebastian, 77767 Appenweier (DE); Rapp, Harald, 77815 Buehl (DE); Horvath, Zsofia, 8175 Balatonfüzfo (HU); Ulrich, Jens, 77815 Buehl (DE); Kruse, Michael, 76547 Sinzheim (DE); Formisano, Salvatore, 76316 Malsch (DE); Palusek, Gabor, 2330 Dunaharaszti (HU)

(57) **Zusammenfassung**

Die Erfindung geht aus von einer Wischarmvorrichtung mit einer Befestigungseinheit (10a - 10f), die eine Antriebswellenaufnahme (12a - 12f) für eine Antriebswelle (14a; 14f) umfasst, wobei die Befestigungseinheit (10a - 10f) einen Grundkörper (16a - 16f) umfasst, der zu einer Befestigung einer Wischstange (18a - 18f) an der Antriebswelle (14a; 14f) vorgesehen ist.

Es wird vorgeschlagen, dass die Befestigungseinheit (10a - 10f) eine Schlauchführungseinheit (20a - 20f) umfasst, die zu einer antriebswellennahen Führung eines Waschwasserschlauchs (22a - 22f) aus der Befestigungseinheit (10a - 10f) heraus in Richtung einer Waschwasserquelle (24a) vorgesehen ist.

## Beschreibung

### Stand der Technik

Es ist bereits eine Wischarmvorrichtung mit einer Befestigungseinheit, die eine Antriebswellenaufnahme für eine Antriebswelle umfasst, wobei die Befestigungseinheit einen Grundkörper umfasst, der zu einer Befestigung einer Wischstange an der Antriebswelle vorgesehen ist, vorgeschlagen worden.

### Offenbarung der Erfindung

Die Erfindung geht aus von einer Wischarmvorrichtung mit einer Befestigungseinheit, die eine Antriebswellenaufnahme für eine Antriebswelle umfasst, wobei die Befestigungseinheit einen Grundkörper umfasst, der zu einer Befestigung einer Wischstange an der Antriebswelle vorgesehen ist.

Es wird vorgeschlagen, dass die Befestigungseinheit eine Schlauchführungseinheit umfasst, die zu einer antriebswellennahen Führung eines Waschwasserschlauchs aus der Befestigungseinheit heraus in Richtung einer Waschwasserquelle vorgesehen ist. Dadurch kann eine besonders kompakte Führung des Waschwasserschlauchs von der Wischarmvorrichtung zur Waschwasserquelle bei gleichzeitig hoher Betriebssicherheit erreicht werden. Unter einer "Befestigungseinheit" soll in diesem Zusammenhang insbesondere eine Einheit verstanden werden, die drehfest mit einer Antriebswelle koppelbar ist und die gelenkig mit einer Wischstange der Wischarmvorrichtung koppelbar ist. Eine Gelenkverbindung zwischen der Befestigungseinheit und der Wischstange ist vorzugsweise federbelastet ausgebildet. Unter einer "Antriebswellenaufnahme" soll in diesem Zusammenhang insbesondere eine Ausnehmung verstanden werden, die zur form- und/oder kraftschlüssigen Aufnahme der Antriebswelle vorgesehen ist. Bevorzugt weist die Antriebswellenaufnahme eine konische Form auf. Unter einer "Antriebswelle" soll in diesem Zusammenhang insbesondere eine Welle verstanden werden, die von einem Antriebsmotor antreibbar ist und die dazu vorgesehen ist, ein Drehmoment auf die Befestigungseinheit auszuüben. Unter einem "Grundkörper" soll in diesem Zusammenhang insbesondere ein einstückig ausgebildeter Körper verstanden werden, der zumindest eine Hälfte, bevorzugt zumindest 80 % einer Gesamtmasse der Befestigungseinheit ausmacht. Vorzugsweise ist die Antriebswellenaufnahme direkt im Grundkörper angeordnet. Bevorzugt ist der Grundkörper dazu vorgesehen, in einem montierten Zustand direkt an der Antriebswelle anzuliegen. Weiterhin bevorzugt ist der Grundkörper dazu vorgesehen, in einem montierten Zustand direkt mit der Wischstange gekoppelt zu sein. Vorzugsweise umfasst der Grundkörper eine Spannfederaufnahme, die zu einer Aufnahme einer Spannfeder, insbesondere einer Zugfeder, vorgesehen ist. Die Spannfeder ist vorzugsweise zu einer Federbelastung der Gelenkverbindung zwischen der Befestigungseinheit und der Wischstange vorgesehen. Vorteilhaft weist die Schlauchführungseinheit zumindest eine Anlagefläche zur Anlage des Waschwasserschlauchs auf. Weiterhin vorteilhaft ist die Schlauchführungseinheit dazu vorgesehen, einen Waschwasserschlauch über eine wesentliche Länge, insbesondere über wenigstens 1 cm, bevorzugt über wenigstens 2 cm, besonders bevorzugt über wenigstens 3 cm zu führen. Unter "antriebswellennah" soll in diesem Zusammenhang insbesondere verstanden werden, dass der Waschwasserschlauch zumindest bereichsweise innerhalb eines gedachten Zylinders mit einer Zylinderachse, die einer Antriebswellendrehachse entspricht, geführt ist, wobei der Zylinder einen Radius von 5 cm, bevorzugt von 4 cm, besonders bevorzugt von 3,2 cm aufweist. Unter einem "Waschwasserschlauch" soll in diesem Zusammenhang insbesondere ein biegsamer Schlauch, bevorzugt ein Gummischlauch, verstanden werden, der dazu vorgesehen ist, Waschwasser zu leiten. Unter "Waschwasser" soll in diesem Zusammenhang insbesondere eine zum Waschen und/oder Reinigen einer Fahrzeugscheibe geeignete Flüssigkeit verstanden werden, wie insbesondere Wasser, Alkohole oder Gemische, die einen Wasseranteil, Frostschutzanteil, Alkoholanteil und/oder Duftstoffanteil aufweisen. Unter einer "Waschwasserquelle" soll in diesem Zusammenhang insbesondere ein Waschwassertank und/oder eine Waschwasserpumpe verstanden werden, die zur Einbringung von Waschwasser in den Waschwasserschlauch vorgesehen ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer weiteren Ausgestaltung der Erfindung wird vorgeschlagen, dass die Schlauchführungseinheit zumindest eine Führungswandung umfasst, die zumindest bereichsweise die Antriebswellenaufnahme umgibt und die dazu vorgesehen ist, eine Anlagefläche für den Waschwasserschlauch bereitzustellen. Dadurch kann ein besonders hoher Knickschutz des Waschwasserschlauchs erreicht werden. Vorzugsweise ist die zumindest eine Führungswandung zumindest bereichsweise in Richtung der Antriebswellendrehachse orientiert. Weiterhin vorteilhaft umgibt die zumindest eine Führungswandung die Antriebswellenaufnahme um wenigstens 180°, besonders vorteilhaft um wenigstens 230°.

Des Weiteren wird vorgeschlagen, dass der Grundkörper einstückig mit der zumindest einen Führungswandung ausgebildet ist. Dadurch kann eine Teilevielfalt der Wischarmvorrichtung vorteilhaft reduziert werden. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Ferner wird vorgeschlagen, dass die Schlauchführungseinheit eine Mantelfläche ausbildet, die zumindest bereichsweise im Wesentlichen senkrecht zu einer Radialrichtung der Antriebswellenaufnahme ausgerichtet ist. Dadurch kann ein besonders gleichmäßiger Biegeradius des Waschwasserschlauchs erzielt werden. Insbesondere erstreckt sich die Radialrichtung senkrecht zur Antriebswellendrehachse.

Zudem wird vorgeschlagen, dass die Schlauchführungseinheit dazu vorgesehen ist, den Waschwasserschlauch schlingenförmig um die Antriebswelle zu führen. Somit kann ein insgesamt besonders großer Biegeradius des Waschwasserschlauchs erreicht und ein Beschädigungsrisiko des Waschwasserschlauchs kann reduziert werden. Unter "schlingenförmig" soll in diesem Zusammenhang insbesondere verstanden werden, dass der Waschwasserschlauch in zumindest einer Projektionsebene einen Kreuzungspunkt aufweist. Vorzugsweise weist der Waschwasserschlauch in einer Projektionsebene, die senkrecht zur Antriebswellenachse verläuft, einen Kreuzungspunkt auf. Weiterhin vorteilhaft ist die Schlauchführungseinheit dazu vorgesehen, den Waschwasserschlauch in einer Projektionsebene um zumindest 270° zu biegen.

Weiterhin wird vorgeschlagen, dass der Grundkörper einen offenen Führungskanal umfasst, der zur Leitung des Waschwasserschlauchs in eine Umfangsrichtung um die Antriebswellenaufnahme vorgesehen ist. Dadurch kann eine konstruktiv besonders einfache und gleichzeitig sichere Führung des Waschwasserschlauchs aus der Wischarmvorrichtung erreicht werden. Vorzugsweise ist der offene Führungskanal nutförmig ausgebildet.

Ferner wird vorgeschlagen, dass der offene Führungskanal zumindest bereichsweise einen Winkel von zumindest im Wesentlichen 45° zu einer Längserstreckungsrichtung des Grundkörpers einschließt. Somit kann ein besonders schlauchschonendes Herausführen des Waschwasserschlauchs aus der Wischarmvorrichtung erreicht werden. Unter einer "Längserstreckungsrichtung des Grundkörpers" soll in diesem Zusammenhang insbesondere eine Richtung verstanden werden, die parallel zu einer maximalen Erstreckungslinie des Grundkörpers verläuft. Unter "zumindest im Wesentlichen" soll in diesem Zusammenhang insbesondere eine Abweichung von weniger als 20°, bevorzugt von weniger als 10° und besonders bevorzugt von weniger als 5° verstanden werden.

Des Weiteren wird vorgeschlagen, dass die Schlauchführungseinheit eine Schlauchführungskappe umfasst, die mit dem Grundkörper koppelbar ausgebildet ist. Somit kann die Schlauchführungseinheit besonders kostengünstig und einfach ausgebildet werden. Die Schlauchführungskappe ist vorzugsweise aus einem Kunststoff ausgebildet.

Außerdem wird vorgeschlagen, dass die Schlauchführungseinheit ein Führungsrastteil umfasst, das zu einer Lagerung des Waschwasserschlauchs sowie einer Verrastung mit dem Grundkörper und/oder der Schlauchführungskappe vorgesehen ist. Dadurch kann eine besonders einfache Montage der Schlauchführungseinheit erzielt werden. Das Führungsrastteil weist vorzugsweise zumindest ein Rastmittel auf. Der Grundkörper und/oder die Schlauchführungskappe weist vorzugsweise eine zum Rastmittel korrespondierende Rastausnehmung auf.

In einer zusätzlichen Ausgestaltung der Erfindung wird vorgeschlagen, dass die Schlauchführungseinheit eine Tülle umfasst, die zur Halterung des Waschwasserschlauchs an der Befestigungseinheit vorgesehen ist. Dadurch kann eine besonders sichere Lagerung des Waschwasserschlauchs an einem Karosseriebauteil erzielt werden. Bevorzugt bildet die Tülle eine Gummitülle aus.

Weiterhin vorteilhaft umfasst die Wischarmvorrichtung den zumindest einen Waschwasserschlauch.

Die erfindungsgemäße Wischarmvorrichtung soll hierbei nicht auf die oben beschriebene Anwendung und Ausführungsform beschränkt sein. Insbesondere kann die erfindungsgemäße Wischarmvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind sechs Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Wischarmvorrichtung und ein Wischblatt in einer schematischen Seitenansicht,
- Fig. 2: die Wischarmvorrichtung mit einem Grundkörper in einer perspektivischen Darstellung,
- Fig. 3: den Grundkörper nach Figur 2 in einer perspektivischen Darstellung,
- Fig. 4: die Wischarmvorrichtung nach Figur 1 in einer weiteren perspektivischen Darstellung,
- Fig. 5: eine Variante der Wischarmvorrichtung nach Figur 1 in einer perspektivischen Darstellung,
- Fig. 6: ein zweites Ausführungsbeispiel einer Wischarmvorrichtung in einer perspektivischen Darstellung,
- Fig. 7: eine Variante des zweiten Ausführungsbeispiels der Wischarmvorrichtung in einer perspektivischen Darstellung,
- Fig. 8: eine weitere Variante des zweiten Ausführungsbeispiels der Wischarmvorrichtung in einer perspektivischen Darstellung,
- Fig. 9: ein drittes Ausführungsbeispiel einer Wischarmvorrichtung in einer perspektivischen Darstellung,
- Fig. 10: eine Variante des dritten Ausführungsbeispiels der Wischarmvorrichtung in einer perspektivischen Darstellung,
- Fig. 11: ein viertes Ausführungsbeispiel einer Wischarmvorrichtung in einer perspektivischen Darstellung,
- Fig. 12: ein fünftes Ausführungsbeispiel einer Wischarmvorrichtung in einer perspektivischen Darstellung,
- Fig. 13: eine Variante des fünften Ausführungsbeispiels der Wischarmvorrichtung in einer perspektivischen Darstellung,
- Fig. 14: eine weitere Variante des fünften Ausführungsbeispiels der Wischarmvorrichtung in einer perspektivischen Darstellung,
- Fig. 15: ein sechstes Ausführungsbeispiel einer Wischarmvorrichtung in einer perspektivischen Darstellung und
- Fig. 16: ein Führungsrastteil der Wischarmvorrichtung nach Figur 15 in einer Schnittdarstellung.

### Beschreibung der Ausführungsbeispiele

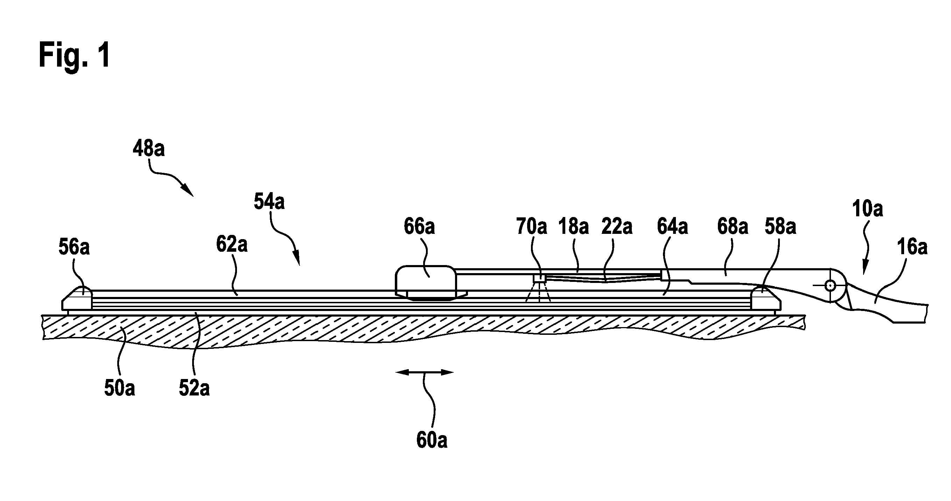

In der Figur 1 sind eine Wischarmvorrichtung und ein daran befestigtes Wischblatt 48a dargestellt. Das Wischblatt 48a bildet ein Flachwischblatt aus. Das Wischblatt 48a ist zur Reinigung einer Fahrzeugscheibe 50a vorgesehen. Dazu weist das Wischblatt 48a eine Wischlippe 52a auf. Die Wischlippe 52a liegt in einem Wischbetrieb auf der Fahrzeugscheibe 50a auf. In einem Wischbetrieb streicht die Wischlippe 52a über die Fahrzeugscheibe 50a, wodurch die Fahrzeugscheibe 50a gereinigt wird. Das Wischblatt 48a weist eine Windabweisereinheit 54a auf, die sich über einen Großteil einer Hauptlängserstreckung des Wischblatts 48a erstreckt. Das Wischblatt 48a weist zwei Endkappen 56a, 58a auf. Die Endkappen 56a, 58a schließen das Wischblatt 48a jeweils in einer Längsrichtung 60a des Wischblatts 48a ab. Die Windabweisereinheit 54a weist zwei Windabweiserelemente 62a, 64a auf. Zwischen den Windabweiserelementen 62a, 64a ist ein Wischblattadapter 66a zur Kopplung mit einem nicht näher dargestellten Wischarmadapter der Wischarmvorrichtung angeordnet.

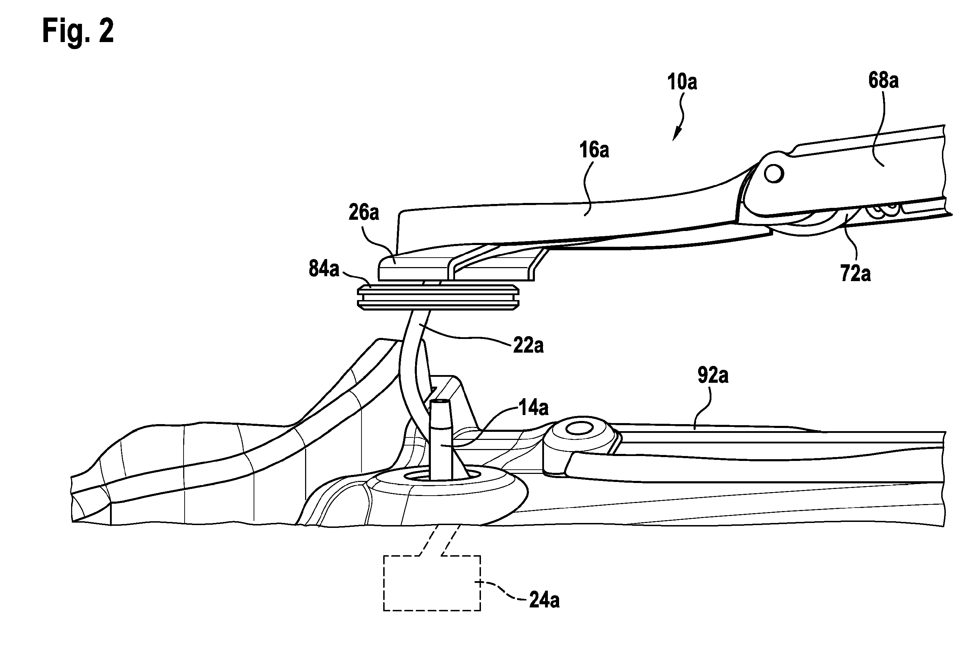

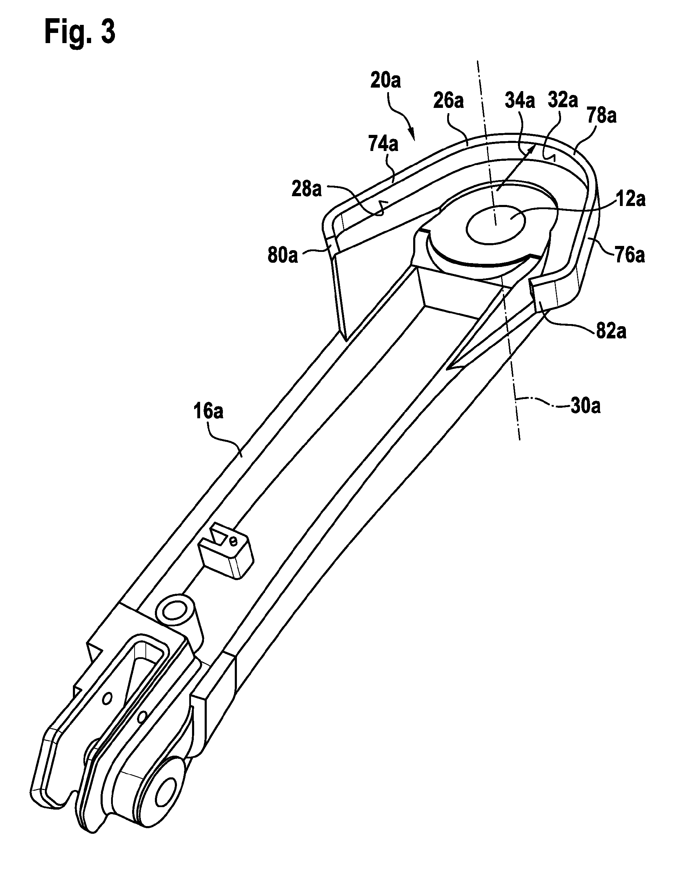

Die Wischarmvorrichtung ist über den Wischarmadapter mit dem Wischblattadapter 66a des Wischblatts 48a lösbar gekoppelt. Die Wischarmvorrichtung umfasst eine Befestigungseinheit 10a. Wie in den Figuren 2 und 3 gezeigt, umfasst die Befestigungseinheit 10a eine Antriebswellenaufnahme 12a für eine Antriebswelle 14a. Über die Antriebswellenaufnahme 12a ist die Befestigungseinheit 10a mit der Antriebswelle 14a drehfest koppelbar. Die Antriebswellenaufnahme 12a ist zur kraftschlüssigen Aufnahme der Antriebswelle 14a vorgesehen. Die Antriebswellenaufnahme 12a weist eine konische Form auf. Die Befestigungseinheit 10a umfasst einen Grundkörper 16a. Die Antriebswellenaufnahme 12a ist im Grundkörper 16a angeordnet. Die Wischarmvorrichtung umfasst eine Wischstange 18a. Die Wischstange 18a weist ein Gelenkteil 68a auf. Die Antriebswelle 14a ist von einem nicht dargestellten Antriebsmotor antreibbar.

Der Grundkörper 16a ist zu einer Befestigung der Wischstange 18a an der Antriebswelle 14a vorgesehen. Der Grundkörper 16a ist gelenkig mit der Wischstange 18a verbunden. Genauer gesagt ist der Grundkörper 16a gelenkig mit dem Gelenkteil 68a der Wischstange 18a verbunden. Eine Gelenkverbindung zwischen dem Grundkörper 16a und dem Gelenkteil 68a ist von einer Zugfeder 72a federbelastet ausgebildet. Der Grundkörper 16a umfasst hierbei eine Spannfederaufnahme, die zur Aufnahme der Zugfeder 72a vorgesehen ist.

Die Wischarmvorrichtung weist eine Waschwasserdüse 70a auf. Die Waschwasserdüse 70a ist zum Auftragen von Waschwasser auf die Fahrzeugscheibe 50a vorgesehen. Dazu wird die Waschwasserdüse 70a mit Waschwasser versorgt. Die Waschwasserdüse 70a ist an der Wischstange 18a angeordnet. Es ist in diesem Zusammenhang jedoch auch denkbar, dass die Waschwasserdüse 70a am Wischblatt 48a angeordnet ist. Die Wischarmvorrichtung umfasst einen Waschwasserschlauch 22a. Der Waschwasserschlauch 22a ist zur Versorgung der Waschwasserdüse 70a mit Waschwasser vorgesehen. Der Waschwasserschlauch 22a verläuft an der Wischstange 18a entlang in das Gelenkteil 68a. Vom Gelenkteil 68a verläuft der Waschwasserschlauch 22a in den Grundkörper 16a der Befestigungseinheit 10a. Von der Befestigungseinheit 10a ausgehend, verläuft der Waschwasserschlauch 22a hin zu einer Waschwasserquelle 24a. Die Waschwasserquelle 24a ist in der Figur 2 schematisch angedeutet. Die Waschwasserquelle 24a umfasst einen Waschwassertank sowie eine Waschwasserpumpe, die zur Einbringung von Waschwasser in den Waschwasserschlauch 22a vorgesehen ist.

Im Folgenden wird näher auf die Führung des Waschwasserschlauchs 22a aus der Befestigungseinheit 10a heraus eingegangen. Wie in der Figur 2 gezeigt, weist der Grundkörper 16a bereichsweise ein U-förmiges Profil auf. Der Waschwasserschlauch 22a ist innerhalb des U-förmigen Profils von einer nicht näher bezeichneten Halteklammer gehalten. Die Befestigungseinheit 10a weist eine Schlauchführungseinheit 20a auf. Die Schlauchführungseinheit 20a ist zu einer antriebswellennahen Führung des Waschwasserschlauchs 22a aus der Befestigungseinheit 10a heraus in Richtung der Waschwasserquelle 24a vorgesehen.

Die Schlauchführungseinheit 20a umfasst eine Führungswandung 26a. Die Führungswandung 26a umgibt bereichsweise die Antriebswellenaufnahme 12a. Die Führungswandung 26a umfasst eine Anlagefläche 28a für den Waschwasserschlauch 22a. Die Führungswandung 26a umfasst zwei ebene Seitenwandungen 74a, 76a. Die Seitenwandungen 74a, 76a sind in einem spitzen Winkel zueinander ausgerichtet. Die Führungswandung 26a umfasst eine kreisbogenförmig gekrümmte Abschlusswandung 78a. Die Abschlusswandung 78a ist um etwa 160° gebogen. Die Abschlusswandung 78a verbindet die Seitenwandungen 74a, 76a miteinander. Die Seitenwandungen 74a, 76a sind an freien Enden 80a, 82a jeweils um etwa 45° zueinander hin gebogen. Die Führungswandung 26a ist bereichsweise in Richtung einer Antriebswellendrehachse 30a orientiert. Die Führungswandung 26a umgibt die Antriebswellenaufnahme 12a um etwa 230°.

Der Grundkörper 16a ist einstückig mit der Führungswandung 26a ausgebildet. Die Führungswandung 26a grenzt an eine offene Seite des U-förmigen Profils des Grundkörpers 16a an. Die Schlauchführungseinheit 20a bildet eine Mantelfläche 32a aus, die bereichsweise senkrecht zu einer Radialrichtung 34a der Antriebswellenaufnahme 12a ausgerichtet ist. Die Mantelfläche 32a ist von der Führungswandung 26a gebildet. Die Radialrichtung 34a erstreckt sich senkrecht zur Antriebswellendrehachse 30a. In einem von der Führungswandung 26a aufgespannten Raum ist der Waschwasserschlauch 22a frei bewegbar. Die Mantelfläche 32a begrenzt einen Bewegungsspielraum des Waschwasserschlauchs 22a.

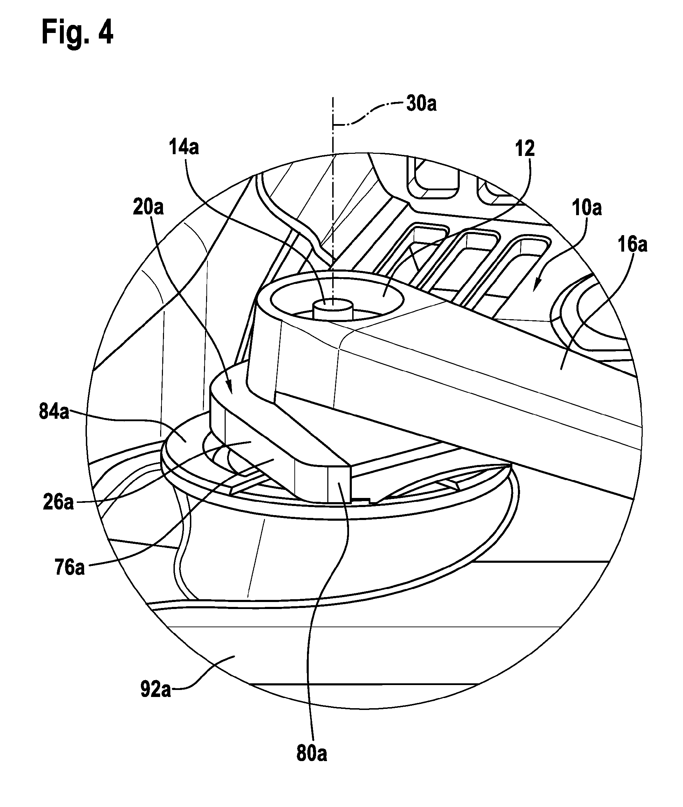

Wie in der Figur 4 gezeigt, umfasst die Schlauchführungseinheit 20a ferner eine Tülle 84a. Die Tülle 84a ist zur Halterung des Waschwasserschlauchs 22a an der Befestigungseinheit 10a vorgesehen. Die Tülle 84a bildet eine Gummitülle aus. Die Tülle 84a ist scheibenförmig ausgebildet. Die Tülle 84a weist einen Durchbruch 86a zur Durchführung des Waschwasserschlauchs 22a auf. Der Durchbruch 86a weist einen Durchmesser auf, der einem Durchmesser des Waschwasserschlauchs 22a entspricht. An einer Mantelfläche 88a der Tülle 84a ist eine Befestigungsnut 90a angeordnet. Die Befestigungsnut 90a ist zur Aufnahme eines Karosseriebauteils 92a vorgesehen, wodurch die Tülle 84a am Karosseriebauteil 92a befestigt wird.

Die Schlauchführungseinheit 20a führt den Waschwasserschlauch 22a schlingenförmig um die Antriebswelle 14a. Der Waschwasserschlauch 22a ist anschließend sicher in einen nicht näher gezeigten Motorraum eines Kraftfahrzeugs geführt. Ein Knicken des Waschwasserschlauchs 22a kann bei einer Schwenkbewegung der Wischarmvorrichtung relativ zur Fahrzeugscheibe 50a aufgrund der Schlauchführungseinheit 20a vermieden werden.

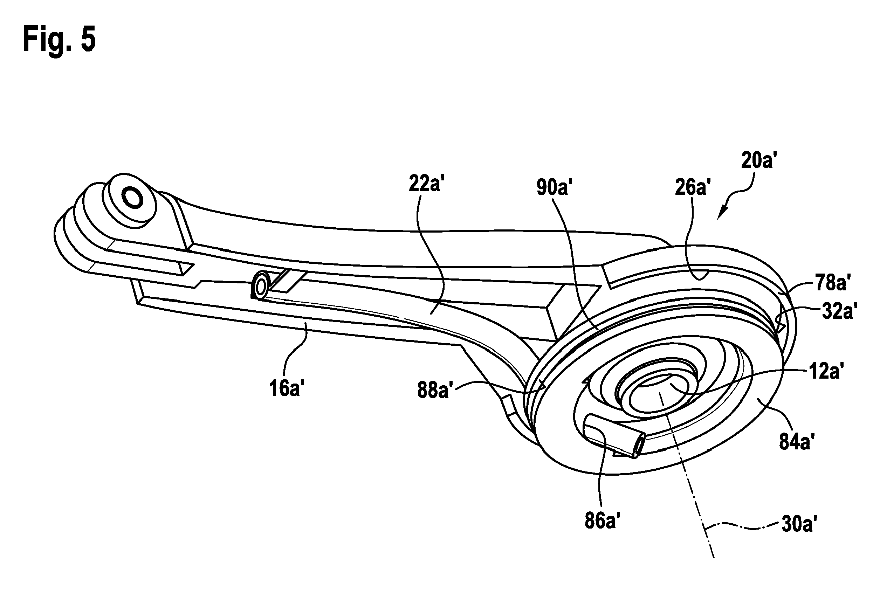

Die Figur 5 zeigt eine Variante des ersten Ausführungsbeispiels, wobei die Führungswandung 26a' ausschließlich eine kreisbogenförmig gekrümmte Abschlusswandung 78a' umfasst, welche die Antriebswellenaufnahme 12a' um mehr als 180° umgibt. Genauer gesagt umgibt die gekrümmte Abschlusswandung 78a' die Antriebswellenaufnahme 12a' um etwa 260°.

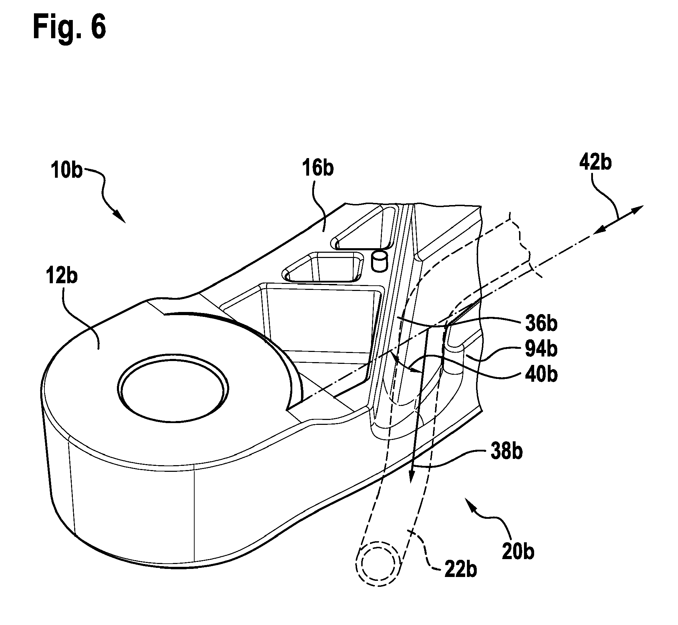

In den Figuren 6 bis 16 sind fünf weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In den Ausführungsbeispielen der Figuren 6 bis 16 ist der Buchstabe a durch die Buchstaben b bis f ersetzt.

In der Figur 6 ist eine Wischarmvorrichtung mit einer Befestigungseinheit 10b gezeigt, die eine Antriebswellenaufnahme 12b für eine hier nicht gezeigte Antriebswelle umfasst. Die Befestigungseinheit 10b umfasst einen Grundkörper 16b, der zu einer Befestigung einer hier nicht näher gezeigten Wischstange an der Antriebswelle vorgesehen ist. Die Befestigungseinheit 10b umfasst eine Schlauchführungseinheit 20b. Die Schlauchführungseinheit 20b ist zu einer antriebswellennahen Führung eines Waschwasserschlauchs 22b aus der Befestigungseinheit 10b heraus in Richtung einer hier nicht gezeigten Waschwasserquelle vorgesehen.

Der Grundkörper 16b umfasst einen offenen Führungskanal 36b, der zur Leitung des Waschwasserschlauchs 22b in eine Umfangsrichtung 38b um die Antriebswellenaufnahme 12b vorgesehen ist. Der offene Führungskanal 36b ist nutförmig ausgebildet. Der offene Führungskanal 36b schließt einen Winkel 40b von 45° zu einer Längserstreckungsrichtung 42b des Grundkörpers 16b ein. Der offene Führungskanal 36b durchbricht dabei einen Seitenflansch 94b des Grundkörpers 16b. Der Waschwasserschlauch 22b tritt in einem montierten Zustand aus dem Seitenflansch 94b des Grundkörpers 16b hervor.

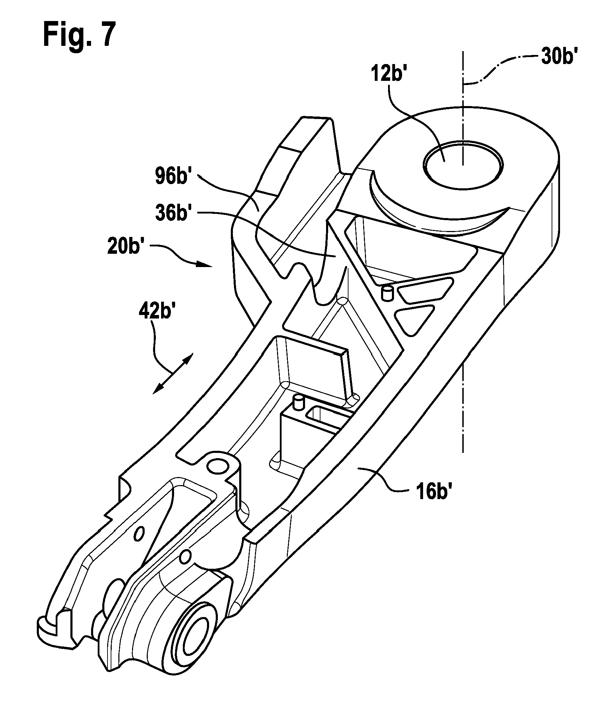

In der Figur 7 ist eine Variante des zweiten Ausführungsbeispiels dargestellt. Die Schlauchführungseinheit 20b' weist einen Zusatzkanal 96b' auf. Der Zusatzkanal 96b' bildet eine Verlängerung des offenen Führungskanals 36b' aus. Der Zusatzkanal 96b' ist am Grundkörper 16b'an einer Außenseite des Seitenflanschs 94b' angeformt. Der Zusatzkanal 96b' ist einstückig mit dem Grundkörper 16b' ausgebildet. Der Zusatzkanal 96b' ist von einem Aluminiumgussteil gebildet. Der Zusatzkanal 96b' weist ein U-förmiges Profil auf. Der Zusatzkanal 96b' verläuft zunächst in einem 45°-Winkel zur Längserstreckungsrichtung 42b', anschließend verläuft der Zusatzkanal 96b' parallel zur Längserstreckungsrichtung 42b'. Der Zusatzkanal 96b' ist somit zur Führung des hier nicht dargestellten Waschwasserschlauchs um die Antriebswellenaufnahme 12b' herum vorgesehen. Der Zusatzkanal 96b' gibt den Waschwasserschlauch in Längserstreckungsrichtung 42b' betrachtet querab einer Antriebswellendrehachse 30b' frei.

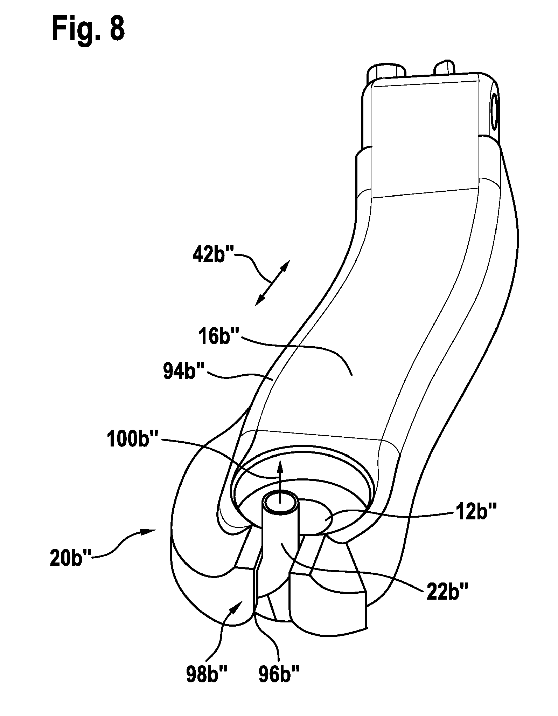

Eine weitere Variante des Zusatzkanals 96b' ist in der Figur 8 gezeigt. Die Schlauchführungseinheit 20b" weist einen Zusatzkanal 96b" auf, der sich um mehr als 90° eines Umfangs der Antriebswellenaufnahme 12b" erstreckt. Der Zusatzkanal 96b" bildet eine Verlängerung des hier nicht gezeigten offenen Führungskanals aus. Der Zusatzkanal 96b" ist am Grundkörper 16b"an einer Außenseite des Seitenflanschs 94b" angeformt. Der Zusatzkanal 96b" ist einstückig mit dem Grundkörper 16b" ausgebildet. Der Zusatzkanal 96b" ist von einem Aluminiumgussteil gebildet. Der Zusatzkanal 96b" weist ein U-förmiges Profil auf. Der Zusatzkanal 96b" verläuft zunächst in einem 45°-Winkel zur Längserstreckungsrichtung 42b", anschließend verläuft der Zusatzkanal 96b' in einem gebogenen Verlauf um die Antriebswellenaufnahme 12b" herum. Der Zusatzkanal 96b" gibt den Waschwasserschlauch 22b" in Längserstreckungsrichtung 42b" betrachtet an einem freien Ende 98b" des Grundkörpers 16b" frei. Genauer gesagt gibt der Zusatzkanal 96b"den Waschwasserschlauch in eine parallel zur Antriebswellendrehachse 30b" verlaufende Richtung 100b" frei.

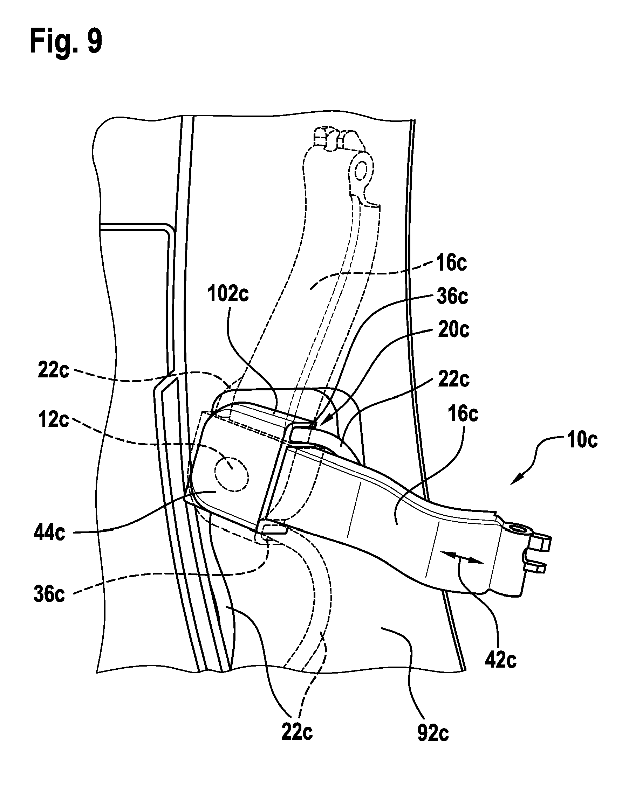

Die Figur 9 zeigt ein drittes Ausführungsbeispiel einer Wischarmvorrichtung mit einer Befestigungseinheit 10c, die eine Antriebswellenaufnahme 12c für eine hier nicht gezeigten Antriebswelle umfasst, wobei die Befestigungseinheit 10c einen Grundkörper 16c umfasst. Die Befestigungseinheit 10c umfasst eine Schlauchführungseinheit 20c, die zu einer antriebswellennahen Führung eines Waschwasserschlauchs 22c aus der Befestigungseinheit 10c heraus in Richtung einer nicht näher gezeigten Waschwasserquelle vorgesehen ist. Die Schlauchführungseinheit 20c umfasst eine Schlauchführungskappe 44c. Die Schlauchführungskappe 44c ist mit dem Grundkörper 16c koppelbar ausgebildet. Zu einer Kopplung mit dem Grundkörper 16c weist die Schlauchführungskappe 44c nicht näher gezeigte Rastmittel auf. Die Schlauchführungskappe 44c ist aus einem Kunststoff ausgebildet. Die Schlauchführungskappe 44c ist einteilig ausgebildet. Die Schlauchführungskappe 44c weist einen U-förmigen Körper auf. Die Schlauchführungskappe 44c überragt seitlich den Grundkörper 16c. Die Schlauchführungskappe 44c bildet zwischen dem Grundkörper 16c und einer außenseitigen Mantelwandung 102c der Schlauchführungskappe 44c einen Führungskanal 36c aus. Der Führungskanal 36c ist in Längserstreckungsrichtung 42c hin geöffnet. Der Führungskanal 36c ist zur Führung des Waschwasserschlauchs 22c vorgesehen. Die Schlauchführungskappe 44c ist zur Führung des Waschwasserschlauchs 22c entlang eines Kreisbogens um einen Winkel von etwa 90° vorgesehen. Gestrichelt ist in der Figur 9 ein um 90° geschwenkter Zustand der Wischarmvorrichtung relativ zu einem Karosseriebauteil 92c gezeigt. Wie dargestellt, führt die Schlauchführungseinheit 20c den Waschwasserschlauch 22c in jedem Zustand knickfrei.

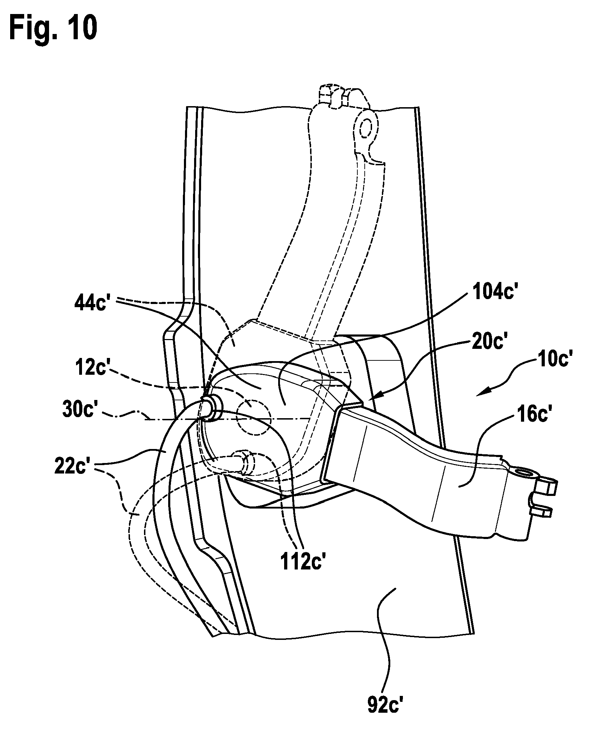

In der Figur 10 ist eine Variante des dritten Ausführungsbeispiels gezeigt. Hierbei ist eine Wischarmvorrichtung mit einer Befestigungseinheit 10c' gezeigt, die eine Antriebswellenaufnahme 12c' für eine Antriebswelle umfasst, wobei die Befestigungseinheit 10c' einen Grundkörper 16c' umfasst. Die Befestigungseinheit 10c' umfasst eine Schlauchführungseinheit 20c', die zu einer antriebswellennahen Führung eines Waschwasserschlauchs 22c' aus der Befestigungseinheit 10c' heraus in Richtung einer nicht näher gezeigten Waschwasserquelle vorgesehen ist. Die Schlauchführungseinheit 20c' umfasst eine Schlauchführungskappe 44c'. Die Schlauchführungskappe 44c' ist mit dem Grundkörper 16c' koppelbar ausgebildet. Zu einer Kopplung mit dem Grundkörper 16c' weist die Schlauchführungskappe 44c' nicht näher gezeigte Rastmittel auf. Die Schlauchführungskappe 44c' ist aus einem Kunststoff ausgebildet. Die Schlauchführungskappe 44c' ist einteilig ausgebildet. Die Schlauchführungskappe 44c' weist einen U-förmigen Körper auf. Die Schlauchführungskappe 44c' liegt seitlich bündig am Grundkörper 16c' an. Die Schlauchführungskappe 44c' weist eine Deckwandung 104c' auf. Die Deckwandung 104c' erstreckt sich zumindest im Wesentlichen senkrecht zu einer Antriebswellendrehachse 30c'. Die Deckwandung 104c' weist eine Ausnehmung 112c' auf. Die Ausnehmung 112c' ist zur Durchführung des Waschwasserschlauchs 22c' durch die Deckwandung 104c' parallel zur Antriebswellendrehachse 30c' vorgesehen. Gestrichelt ist in der Figur 10 ein um 90° geschwenkter Zustand der Wischarmvorrichtung relativ zu einem Karosseriebauteil 92c' gezeigt. Wie dargestellt, führt die Schlauchführungseinheit 20c' den Waschwasserschlauch 22c' in jedem Zustand knickfrei.

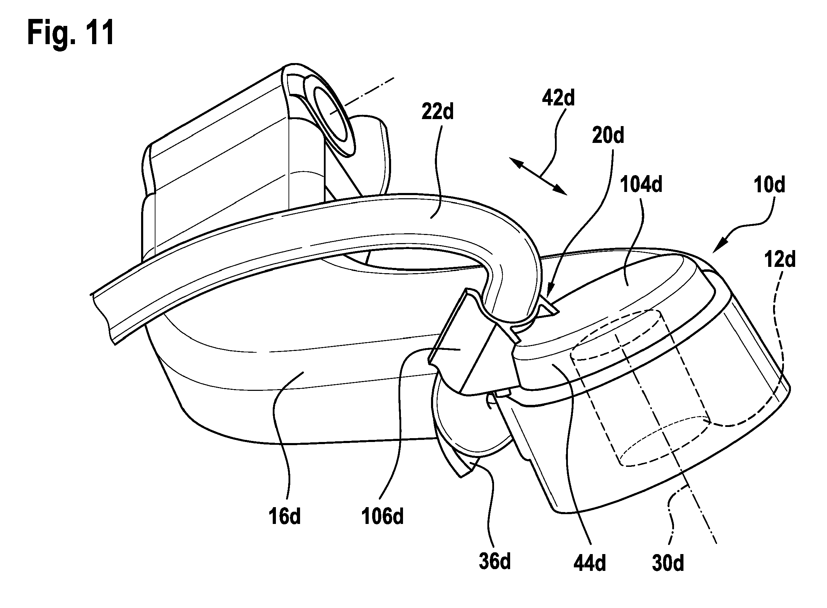

In der Figur 11 ist ein weiteres Ausführungsbeispiel der Erfindung dargestellt. Die

Figur 11 zeigt eine Wischarmvorrichtung mit einer Befestigungseinheit 10d, die eine Antriebswellenaufnahme 12d für eine hier nicht gezeigte Antriebswelle umfasst. Die Befestigungseinheit 10d umfasst einen Grundkörper 16d. Die Befestigungseinheit 10d umfasst eine Schlauchführungseinheit 20d. Die Schlauchführungseinheit 20d ist zu einer antriebswellennahen Führung eines Waschwasserschlauchs 22d aus der Befestigungseinheit 10d heraus in Richtung einer hier nicht gezeigten Waschwasserquelle vorgesehen. Die Schlauchführungseinheit 20d umfasst eine Schlauchführungskappe 44d. Die Schlauchführungskappe 44d ist mit dem Grundkörper 16d koppelbar ausgebildet. Zu einer Kopplung mit dem Grundkörper 16d weist die Schlauchführungskappe 44d nicht näher gezeigte Rastmittel auf, die innerhalb der Antriebswellenaufnahme 12d eingerastet sind. Es ist in diesem Zusammenhang auch denkbar, dass die Schlauchführungskappe 44d kraftschlüssig in die Antriebswellenaufnahme 12d eingepresst ist.

Die Schlauchführungskappe 44d ist aus einem Kunststoff ausgebildet. Die Schlauchführungskappe 44d ist einteilig ausgebildet. Die Schlauchführungskappe 44d weist einen Deckwandung 104d mit einem kreisrunden Profil auf. Die Schlauchführungskappe 44d weist eine Schlauchklemme 106d zur Lagerung des Waschwasserschlauchs 22d auf. Die Schlauchklemme 106d führt den Waschwasserschlauch 22d in einem Winkel von 45° relativ zu einer Antriebswellendrehachse 30d. Die Schlauchklemme 106d führt den Waschwasserschlauch 22d in einem Winkel von 45° relativ zu einer Längserstreckungsrichtung 42d. Die Schlauchführungskappe 44d führt den Waschwasserschlauch 22d in einen offenen Führungskanal 36d des Grundkörpers 16d.

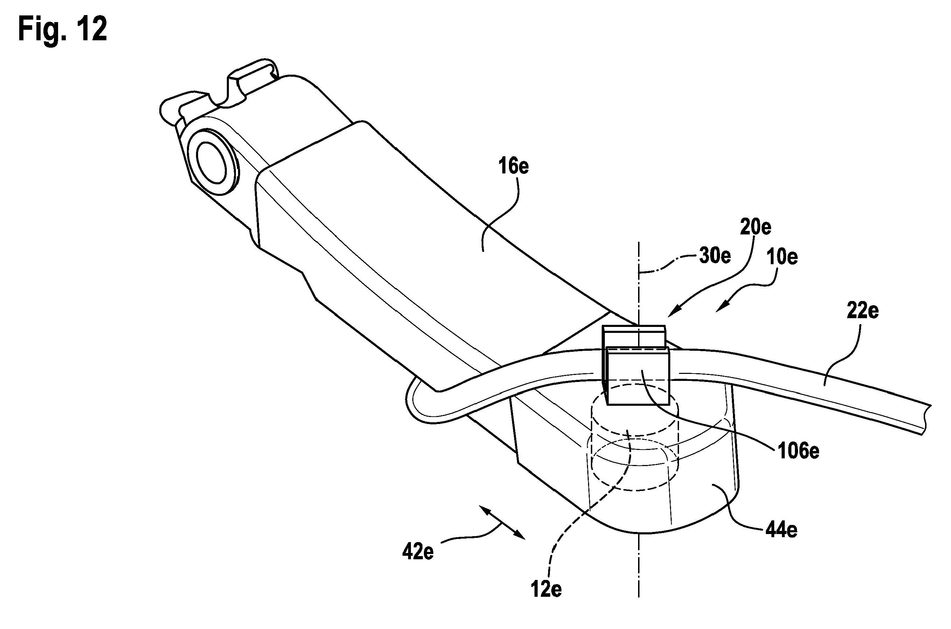

In der Figur 12 ist ein weiteres Ausführungsbeispiel der Erfindung dargestellt. Die Figur 12 zeigt eine Wischarmvorrichtung mit einer Befestigungseinheit 10e, die eine Antriebswellenaufnahme 12e für eine hier nicht gezeigte Antriebswelle umfasst. Die Befestigungseinheit 10e umfasst einen Grundkörper 16e. Die Befestigungseinheit 10e umfasst eine Schlauchführungseinheit 20e. Die Schlauchführungseinheit 20e ist zu einer antriebswellennahen Führung eines Waschwasserschlauchs 22e aus der Befestigungseinheit 10e heraus in Richtung einer hier nicht gezeigten Waschwasserquelle vorgesehen. Die Schlauchführungseinheit 20e umfasst eine Schlauchführungskappe 44e. Die Schlauchführungskappe 44e ist mit dem Grundkörper 16e koppelbar ausgebildet. Zu einer Kopplung mit dem Grundkörper 16e weist die Schlauchführungskappe 44e nicht näher gezeigte Rastmittel auf, die innerhalb der Antriebswellenaufnahme 12e eingerastet sind. Die Schlauchführungskappe 44e ist aus einem Kunststoff ausgebildet. Die Schlauchführungskappe 44e ist einteilig ausgebildet. Die Schlauchführungskappe 44e weist eine Schlauchklemme 106e zur Lagerung des Waschwasserschlauchs 22e auf. Die Schlauchklemme 106e führt den Waschwasserschlauch 22e in einem Winkel von 90° relativ zu einer Antriebswellendrehachse 30e. Die Antriebswellendrehachse 30e schneidet dabei die Schlauchklemme 106e. Die Schlauchklemme 106e führt den Waschwasserschlauch 22e in einem Winkel von 45° relativ zu einer Längserstreckungsrichtung 42e. Die Schlauchführungskappe 44e führt den Waschwasserschlauch 22e in einen hier nicht gezeigten offenen Führungskanal des Grundkörpers 16e. Die Schlauchklemme 106e ist einstückig mit der Schlauchführungskappe 44e ausgebildet.

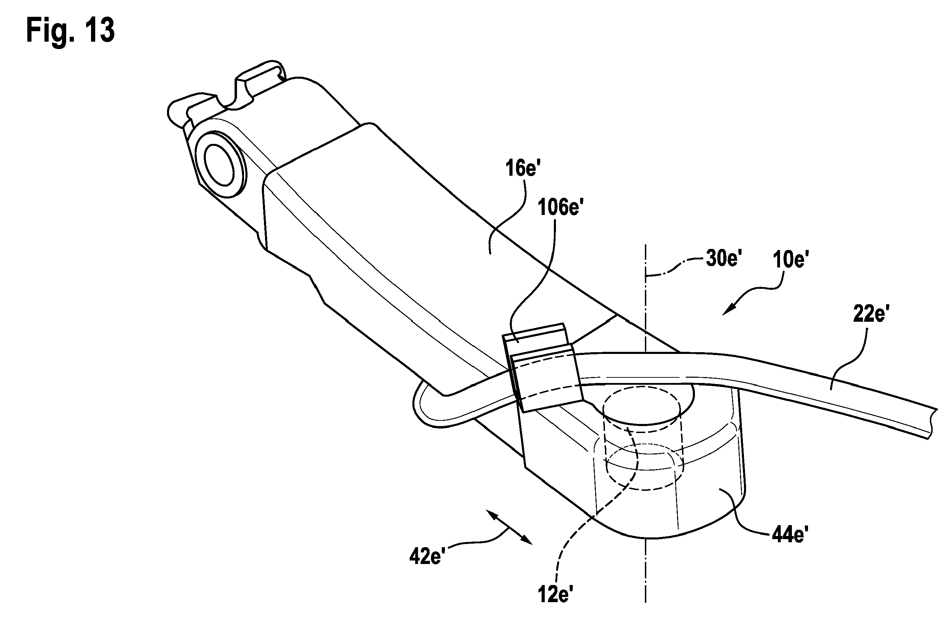

Eine alternative Ausgestaltung der Schlauchführungskappe 44e ist in der Figur 13 als Schlauchführungskappe 44e' dargestellt. Die Schlauchführungskappe 44e' und die Schlauchklemme 106e' sind separat ausgebildet. Die Schlauchklemme 106e' ist über ein nicht näher gezeigtes Rastmittel mit der Schlauchführungskappe 44e' verrastet. Die Schlauchklemme 106e' ist ferner zur Antriebswellendrehachse 30e' versetzt angeordnet. Die Schlauchklemme 106e' führt den Waschwasserschlauch 22e' in einem Winkel von 90° relativ zur Antriebswellendrehachse 30e'. Die Schlauchklemme 106e' führt den Waschwasserschlauch 22e' in einem Winkel von 45° relativ zur Längserstreckungsrichtung 42e'.

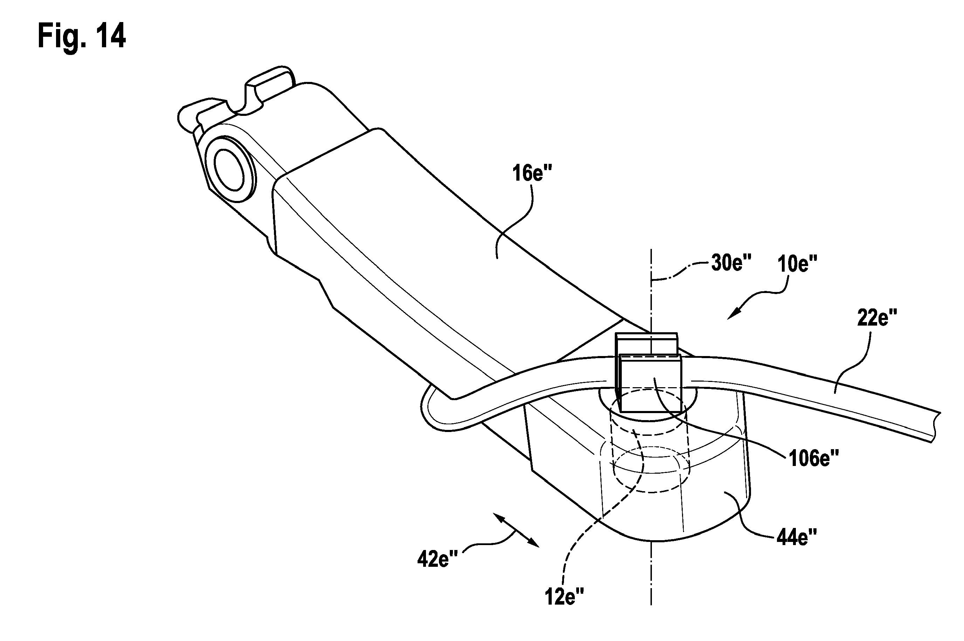

Eine weitere alternative Ausgestaltung der Schlauchführungskappe 44e ist in der Figur 14 als Schlauchführungskappe 44e" dargestellt. Die Schlauchführungskappe 44e" und die Schlauchklemme 106e" sind separat ausgebildet. Die Schlauchklemme 106e" ist über ein nicht näher gezeigtes Rastmittel mit der Schlauchführungskappe 44e" verrastet. Die Schlauchklemme 106e" führt den Waschwasserschlauch 22e" in einem Winkel von 90° relativ zur Antriebswellendrehachse 30e". Die Antriebswellendrehachse 30e" schneidet die Schlauchklemme 106e". Die Schlauchklemme 106e" führt den Waschwasserschlauch 22e" in einem Winkel von 45° relativ zur Längserstreckungsrichtung 42e".

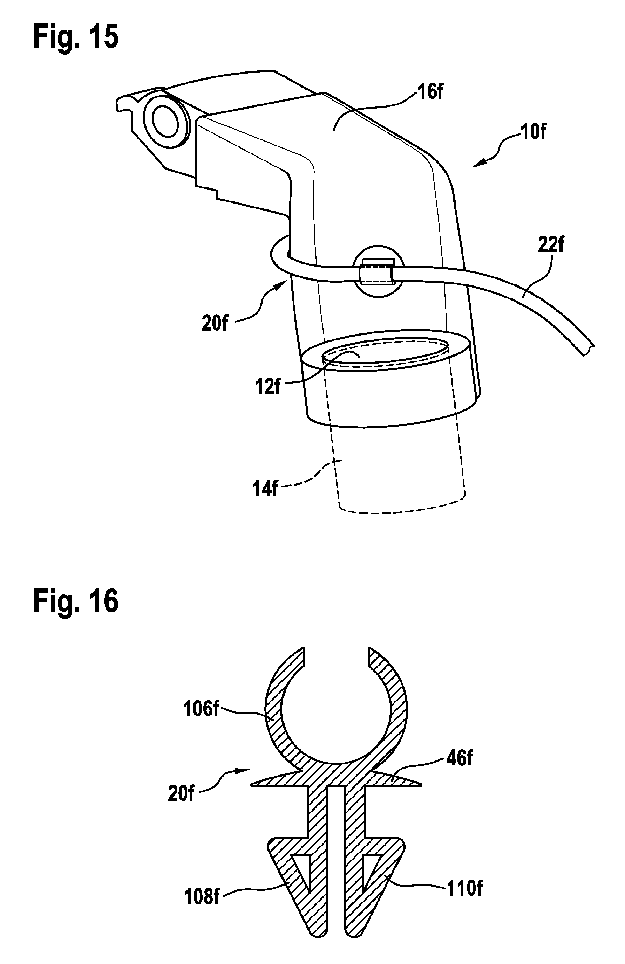

Die Figur 15 zeigt ein weiteres Ausführungsbeispiel der Erfindung. Die Figur 15 zeigt dabei eine Wischarmvorrichtung mit einer Befestigungseinheit 10f, die eine Antriebswellenaufnahme 12f für eine Antriebswelle 14f umfasst, wobei die Befestigungseinheit 10f einen Grundkörper 16f umfasst, der zu einer Befestigung einer hier nicht gezeigten Wischstange an der Antriebswelle 14f vorgesehen ist. Die Befestigungseinheit 10f umfasst eine Schlauchführungseinheit 20f, die zu einer antriebswellennahen Führung eines Waschwasserschlauchs 22f aus der Befestigungseinheit 10f heraus in Richtung einer hier nicht gezeigten Waschwasserquelle vorgesehen ist.

Die Schlauchführungseinheit 20f umfasst ein Führungsrastteil 46f. Das Führungsrastteil 46f ist zu einer Lagerung des Waschwasserschlauchs 22f sowie zu einer Verrastung mit dem Grundkörper 16f vorgesehen. Wie in der Figur 16 gezeigt, weist das Führungsrastteil 46f zwei Rastmittel 108f, 110f auf. Ferner weist das Führungsrastteil 46f eine Schlauchklemme 106f auf. Die Rastmittel 108f, 110f sind elastisch aufeinander zu bewegbar ausgebildet. Bei einer Montage werden die Rastmittel 108f, 110f ausgelenkt und verrasten in einer Montageposition elastisch zurück in eine Ausgangsposition. Der Grundkörper 16f weist eine zu den Rastmitteln 108f, 110f korrespondierende, nicht näher gezeigte Rastausnehmung auf.

## Patentansprüche

1. Wischarmvorrichtung mit einer Befestigungseinheit (10a - 10f), die eine Antriebswellenaufnahme (12a - 12f) für eine Antriebswelle (14a; 14f) umfasst, wobei die Befestigungseinheit (10a - 10f) einen Grundkörper (16a - 16f) umfasst, der zu einer Befestigung einer Wischstange (18a - 18f) an der Antriebswelle (14a; 14f) vorgesehen ist, **dadurch gekennzeichnet, dass** die Befestigungseinheit (10a - 10f) eine Schlauchführungseinheit (20a - 20f) umfasst, die zu einer antriebswellennahen Führung eines Waschwasserschlauchs (22a - 22f) aus der Befestigungseinheit (10a - 10f) heraus in Richtung einer Waschwasserquelle (24a) vorgesehen ist.

2. Wischarmvorrichtung nach Anspruch 1, **dadurch gekennzeichnet, dass** die Schlauchführungseinheit (20a) zumindest eine Führungswandung (26a) umfasst, die zumindest bereichsweise die Antriebswellenaufnahme (12a) umgibt und die dazu vorgesehen ist, eine Anlagefläche (28a) für den Waschwasserschlauch (22a) bereitzustellen.

3. Wischarmvorrichtung nach Anspruch 2, **dadurch gekennzeichnet, dass** der Grundkörper (16a) einstückig mit der zumindest einen Führungswandung (26a) ausgebildet ist.

4. Wischarmvorrichtung nach einem der vorhergehenden Ansprüche, **dadurch gekennzeichnet, dass** die Schlauchführungseinheit (20a) eine Mantelfläche (32a) ausbildet, die zumindest bereichsweise im Wesentlichen senkrecht zu einer Radialrichtung (34a) der Antriebswellenaufnahme (12a) ausgerichtet ist.

5. Wischarmvorrichtung nach einem der vorhergehenden Ansprüche, **dadurch gekennzeichnet, dass** die Schlauchführungseinheit (20a) dazu vorgesehen ist, den Waschwasserschlauch (22a) schlingenförmig um die Antriebswelle (14a) zu führen.

6. Wischarmvorrichtung nach einem der vorhergehenden Ansprüche, **dadurch gekennzeichnet, dass** der Grundkörper (16b - 16e) einen offenen Führungskanal (36b - 36e) umfasst, der zur Leitung des Waschwasserschlauchs (22b - 22e) in eine Umfangsrichtung (38b) um die Antriebswellenaufnahme (12b - 12e) vorgesehen ist.

7. Wischarmvorrichtung nach Anspruch 6, **dadurch gekennzeichnet, dass** der offene Führungskanal (36b) zumindest bereichsweise einen Winkel (40b) von zumindest im Wesentlichen 45° zu einer Längserstreckungsrichtung (42b) des Grundkörpers (16b) einschließt.

8. Wischarmvorrichtung nach einem der vorhergehenden Ansprüche, **dadurch gekennzeichnet, dass** die Schlauchführungseinheit (20c - 20e) eine Schlauchführungskappe (44c - 44e) umfasst, die mit dem Grundkörper (16c - 16e) koppelbar ausgebildet ist.

9. Wischarmvorrichtung nach einem der vorhergehenden Ansprüche, **dadurch gekennzeichnet, dass** die Schlauchführungseinheit (20f) ein Führungsrastteil (46f) umfasst, das zu einer Lagerung des Waschwasserschlauchs (22f), sowie einer Verrastung mit dem Grundkörper (16f) und/oder der Schlauchführungskappe (44f) vorgesehen ist.

10. Wischarmvorrichtung nach einem der vorhergehenden Ansprüche, **gekennzeichnet, durch** den zumindest einen Waschwasserschlauch (22a - 22f).
